# FASCICULE DE BREVET EUROPEEN

(11) **EP 1 080 432 B1**
(45) Date de publication et mention de la délivrance du brevet: **13.12.2006**
(21) Numéro de dépôt: 99913050.3
(22) Date de dépôt: 16.04.1999
(51) Int. Cl.: G06F 17/40, G01R 13/34, H03M 1/00

(54) **SYSTEME D'ACQUISITION DE DONNEES COMPRENANT DES MOYENS D'ANALYSE ET DE STOCKAGE EN TEMPS REEL**
DATENERFASSUNGSSYSTEM MIT MITTELN ZUR ANALYSE UND ZUM ABSPEICHERN IN ECHTZEIT
DATA ACQUISITION SYSTEM COMPRISING MEANS FOR ANALYSING AND STORING IN REAL TIME

(30) Priorité: 18.05.1998 EP 98810452
(43) Date de publication de la demande: 07.03.2001
(73) Titulaire: Acqiris, 1228 Plan-les-Ouates (CH)
(72) Inventeur: HUNGERBUEHLER, Viktor, CH-1242 Satigny (CH); MAURON, Bernard, CH-1292 Chambésy (CH)
(74) Mandataire: P&TS Patents & Technology Surveys SA
(86) Numéro de dépôt international: PCT/CH1999/000153
(87) Numéro de publication internationale: WO 1999/060495

(56) Documents cités:
- EP-A- 0 375 246
- EP-A- 0 629 966
- US-A- 4 654 632
- HUBA G: "HIGH-SPEED DATA ACQUISITION WITH SDA 8020 BY DATA SPLITTING" COMPONENTS, vol. 24, no. 6, 1 décembre 1989 (1989-12-01), pages 233-235, XP000095517 ISSN: 0945-1137

## Description

La présente invention concerne un système d'acquisition de données comprenant un circuit de conversion d'un signal d'entrée analogique en une pluralité de signaux numériques, selon le préambule de la revendication 1. La présente invention concerne en particulier un système d'acquisition de données comprenant un circuit de conversion fournissant des signaux numériques aptes à être traités par un processeur numérique dans un système d'acquisition de données.

On connaît de nombreux types de systèmes d'acquisition de données, par exemple des enregistreurs transitoires et des oscilloscopes numériques, dans lesquels il est nécessaire de convertir un ou plusieurs signaux analogiques en un ou plusieurs signaux numériques aptes à être mémorisés dans une mémoire numérique et traités par un processeur numérique. Ces systèmes comprennent généralement un étage d'entrée constitué d'un ou plusieurs numériseurs et d'une mémoire pour les données numérisées ; le processeur accède le plus souvent à ladite mémoire via un bus. Dans les systèmes à basse fréquence, cette mémoire peut par exemple être constituée directement par la mémoire vive d'un ordinateur. Les données numérisées sont stockées dans cette mémoire et traitées, par exemple affichées, par le processeur de cet ordinateur soit en temps réel, soit ultérieurement, par exemple lorsque toutes les données ont été acquises.

On utilise de plus en plus souvent dans la technique électronique des signaux analogiques à très haute fréquence qui nécessitent des systèmes d'acquisition, par exemple des oscilloscopes, très rapides. On réalise actuellement des numériseurs qui travaillent avec une fréquence d'échantillonnage supérieure à 500 MHz, par exemple de l'ordre de 1 GHz ou plus ; il est à prévoir que ces limites actuelles vont être dépassées avec l'apparition de composants plus performants. Ces numériseurs permettent en vertu du principe de Nyquist de fournir une représentation numérique fidèle de signaux analogiques ayant une fréquence maximale de plusieurs centaines de MHz.

Ces numériseurs ultra-rapides fournissent un mot numérique, par exemple un octet dans le cas de convertisseurs à huit bits, à chaque flanc du signal d'échantillonnage, par exemple chaque nanoseconde ; le débit numérique généré est donc extrêmement élevé, et généralement incompatible avec la fréquence d'écriture maximale des circuits de mémoire usuels. On connaît donc l'utilisation de démultiplexeurs, qui permettent dans un système d'acquisition de données de fournir en parallèle N mots délivrés en série par un numériseur. La fréquence à la sortie du démultiplexeur est divisée par N, au prix d'une multiplication par ce même facteur de la largeur du bus de données. Le démultiplexeur permet donc de convertir un flux de mots de m bits en un autre flux de mots de N x m bits de débit N fois plus faible, et donc compatible avec les vitesses d'écriture des composants mémoires disponibles.

Dans de nombreuses situations, on s'intéresse plus particulièrement à certains événements particuliers dans un flux de données continu ou très long. Par exemple, on souhaite souvent acquérir une fenêtre temporelle de taille limitée autour d'un événement particulier du signal analysé, par exemple autour d'un passage à zéro. Lorsque le flux de données à analyser est continu, ou très long, il n'est pas possible de le stocker entièrement en mémoire pour un coût acceptable. La taille de la mémoire disponible dans un système conventionnel impose donc généralement un compromis entre la fréquence d'échantillonnage et la durée d'acquisition du signal. Si la fenêtre d'acquisition mémorisée est trop courte, elle risque cependant de ne pas contenir les instants les plus importants du signal, notamment les échantillons juste avant et juste après l'occurrence d'un événement particulier du signal.

Le document US5'397'981 décrit un circuit de conversion d'un signal d'entrée analogique en signaux numérique. Le circuit comprend un circuit d'analyse des données analogiques qui permet d'interrompre l'acquisition suite à la détection d'un événement prédéfini dans le flux de donnes analogiques.

L'article de Huba G:*"High-Speed Data Acquisition with SDA 8020 by Data Splitting"*, vol. 24, n°6, 1 décembre 1989, pages 233-235, ISSN:0945-1137 décrit un circuit de conversion ECL-TTL, muni d'un compteur définissant l'adresse d'écriture dans une mémoire CMOS. Ce document ne concerne toutefois pas la conversion analogique-numérique et ne suggère pas de modifier l'adresse d'écriture en fonction des données ECL introduites.

L'article XP000534889 de K. Balasubramianian, *et al*., propose un numériseur comprenant un circuit de circuit de déclanchement basé sur une analyse du signal numérisé.

Un but de l'invention est de remédier aux inconvénients mentionnés, et d'étendre les possibilités de traitement et d'analyse en temps réel de données numériques à haute fréquence dans un système d'acquisition de données.

Un autre but est de fournir un système permettant d'acquérir des échantillons numériques dans une fenêtre temporelle liée temporellement avec un événement prédéfini dans ce signal, et ainsi de mémoriser principalement les portions du signal les plus importantes.

Selon l'invention, ces objectifs sont atteints au moyen d'un système d'acquisition de données comportant les éléments de la revendication 1, différentes variantes étant par ailleurs indiquées dans les revendications dépendantes.

En particulier, ces objectifs sont atteints grâce à un système d'acquisition de données dans lequel, suite à la détection au moyen d'un circuit d'analyse en temps réel d'un événement particulier dans un flux de données numériques, la mémorisation de données dans la mémoire de stockage est altérée, par exemple interrompue, de façon à permettre le traitement ou la visualisation d'une portion limitée du flux de données.

Selon l'invention, ces objectifs sont en outre atteints au moyen d'un circuit pour convertir un signal analogique haute fréquence en une pluralité de signaux numériques aptes à être traités par un processeur numérique dans un système d'acquisition de données, comprenant un convertisseur analogique-numérique, un élément de mémorisation accessible par le processeur pour mémoriser les données numériques converties, et un circuit d'analyse en temps réel des données numériques converties, apte à modifier l'adresse de mémorisation des données dans les moyens de mémorisation suite à la détection d'un événement particulier dans les données numériques converties.

Dans une variante préférentielle de l'invention, le circuit d'analyse est connecté à la sortie d'un démultiplexeur fournissant en parallèle une pluralité de mots de m bits fournis en série par le convertisseur analogique numérique.

En réalisant ou en programmant le circuit d'analyse de manière appropriée, il est ainsi possible de détecter en temps réel des événements quelconques dans le flux de données numériques, et ainsi de modifier immédiatement l'adresse de mémorisation de ces données, de façon à conserver en mémoire une fenêtre temporelle liée à cet événement.

Avantageusement, le fonctionnement du circuit d'analyse en temps réel peut être paramétré ou même complètement déterminé ou programmé par le processeur numérique ; une grande flexibilité est ainsi obtenue, et il est possible d'effectuer une détection de différents événements sans modifier la configuration physique du circuit.

L'invention sera mieux comprise à l'aide de la description d'un mode de réalisation de l'invention donné à titre d'exemple et illustré par les figures qui montrent :
La figure 1 un schéma-bloc d'un circuit de conversion d'un signal d'entrée analogique haute fréquence en une pluralité de signaux numériques selon l'invention.
La figure 2 un schéma-bloc du contrôleur d'adresse selon l'invention.
La figure 3 un diagramme temporel de différents signaux générés par le circuit de l'invention.

Bien que le circuit de l'invention soit particulièrement destiné à être utilisé dans un oscilloscope, notamment dans un oscilloscope numérique à haute fréquence, ou dans un enregistreur transitoire, l'homme du métier comprendra que ce circuit peut également être utilisé dans tout système d'acquisition de données haute-fréquence, en particulier lorsque la fréquence d'échantillonnage du ou des numériseurs est égale ou supérieure à la fréquence de bus externe du processeur numérique.

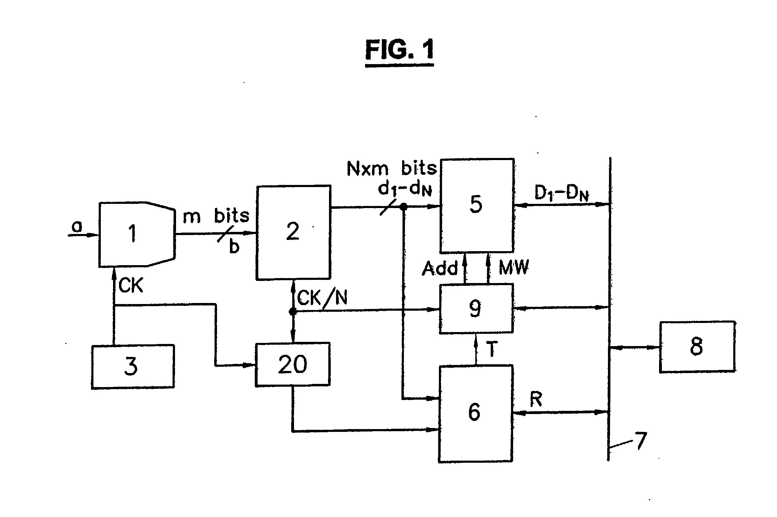

La figure 1 illustre un schéma-bloc de l'ensemble du circuit de conversion selon l'invention. Ce circuit est destiné à être utilisé dans un système d'acquisition de données de type connu. Au moins un signal analogique (a) à analyser est converti en un signal numérique b par au moins un numériseur 1 de type connu. Le numériseur 1 comprend de préférence un étage d'échantillonnage et maintien (Sample-and-Hold) et un convertisseur analogique-numérique montés en série. Le numériseur 1 fournit à chaque instant d'échantillonnage, déterminé par un signal d'horloge CK fourni par le générateur d'horloge 3, une valeur d'échantillonnage correspondant à la valeur instantanée du signal analogique a. Pour que le signal analogique a soit représenté de manière non équivoque par le signal numérique b, le numériseur 1 doit utiliser une fréquence d'échantillonnage au moins égale à la fréquence de Nyquist, c'est-à-dire une fréquence au moins égale au double de la fréquence maximale du signal analogique. Si le circuit est destiné à analyser des signaux de plusieurs centaines de MHz, on choisira donc de préférence une fréquence d'échantillonnage supérieure à 500MHz, de préférence supérieure à 1 GHz. Dans une variante non représentée, il est également possible d'utiliser dans le cadre de cette invention plusieurs numériseurs fournissant des échantillons numériques entrelacés, afin d'augmenter la fréquence d'échantillonnage possible avec un type de numériseur donné.

La résolution du numériseur 1 dépend des besoins de l'application spécifique ; dans de nombreuses applications de haute fréquence, un numériseur à relativement basse résolution, fournissant des valeurs d'échantillonnage codées par exemple avec un nombre de bits m de 8, 10 ou 12, est suffisant, l'invention n'étant toutefois pas limitée à ces valeurs de m.

Le numériseur 1 fournit à chaque instant d'échantillonnage un mot de m bits, par exemple 8 bits toutes les nanosecondes. Ce débit est supérieur à la fréquence d'écriture maximale des mémoires vives usuelles, en sorte que pour mémoriser ces données dans une mémoire vive 5, il est généralement nécessaire de les démultiplexer au moyen d'au moins un démultiplexeur 2 de type connu permettant de diviser le débit du signal numérique b par un facteur N, par exemple par 4, l'invention n'étant toutefois pas limitée à cette valeur particulière de N ni même à la présence d'un démultiplexeur. Ces données démultiplexées sont mémorisées dans au moins une mémoire vive 5, l'adresse de stockage étant déterminée par un contrôleur d'adresse 9 décrit plus bas. Un système de traitement numérique, comprenant au moins un processeur numérique 8 accède ensuite aux données mémorisées D₁-D_{N} de préférence par l'intermédiaire d'un bus 7, et selon l'algorithme exécuté effectue différentes opérations de traitement, d'analyse, de stockage et/ou d'affichage de ces données sur un écran non représenté.

La mémoire vive 5 peut être constituée par n'importe quel type de mémoire dynamique ou de préférence statique, sous la forme d'un ou plusieurs modules discrets organisés selon n'importe quel schéma approprié. Dans une variante préférentielle de l'invention, la mémoire 5 est une mémoire à double accès, permettant au système de traitement numérique 8 d'accéder aux données mémorisées pendant que le démultiplexeur 2 écrit de nouvelles données. De manière préférentielle, le système de traitement numérique 8 peut en outre accéder au compteur d'adresse 9 pour modifier l'adresse à laquelle les données démultiplexées sont écrites, ou pour modifier l'organisation de cette mémoire en organisant par exemple un ou plusieurs segments à l'intérieur de cette mémoire.

Selon l'invention, le circuit de conversion comporte au moins un circuit numérique d'analyse en temps réel 6 apte à analyser en temps réel les données numériques b fournies par le convertisseur analogique-numérique 1. Les données sont analysées parallèlement à leur mémorisation dans la mémoire 5. Dans la variante préférentielle illustrée, le circuit d'analyse 6 est relié à la sortie du démultiplexeur 2, et reçoit ainsi des données numériques dont le débit est divisé par N par rapport aux données b à la sortie du convertisseur 1. Le circuit d'analyse 6 pourrait toutefois aussi être connecté directement à la sortie du convertisseur 1, dans le cas d'un circuit suffisamment rapide par rapport aux données acquises par le système.

Le circuit numérique 6 est synchronisé par les signaux fournis par le générateur d'horloge 20 . Il fournit en sortie un signal de déclenchement (trigger) commandant le contrôleur d'adresse 9 lorsqu'un événement déterminé est détecté dans le flux de données. Dans une variante préférentielle de l'invention, comme on le verra plus loin, le circuit numérique 6 fournit en outre un signal de résultat R au système de traitement numérique 8.

Le signal de déclenchement T peut par exemple être fourni par le circuit 6 dès que celui-ci détecte une erreur ou une condition particulière dans le signal numérique b. Il est également possible dans le cadre de cette invention de réaliser des circuits d'analyse fournissant un signal de déclenchement T lorsqu'un événement quelconque parmi une pluralité d'événements prédéfinis se produit, ou lorsque plusieurs conditions distinctes sont réunies. De la même manière, il est possible de réaliser un circuit d'analyse réagissant à des événements distincts en délivrant des signaux de déclenchement distincts T₀-T_{L} pouvant engendrer un comportement différent du contrôleur d'adresse 9. Il est en outre également possible dans le cadre de cette invention de prévoir plusieurs circuits d'analyse 6 branchés en parallèle effectuant différents traitements sur les données numériques b, de façon à détecter différents événements dans ces données.

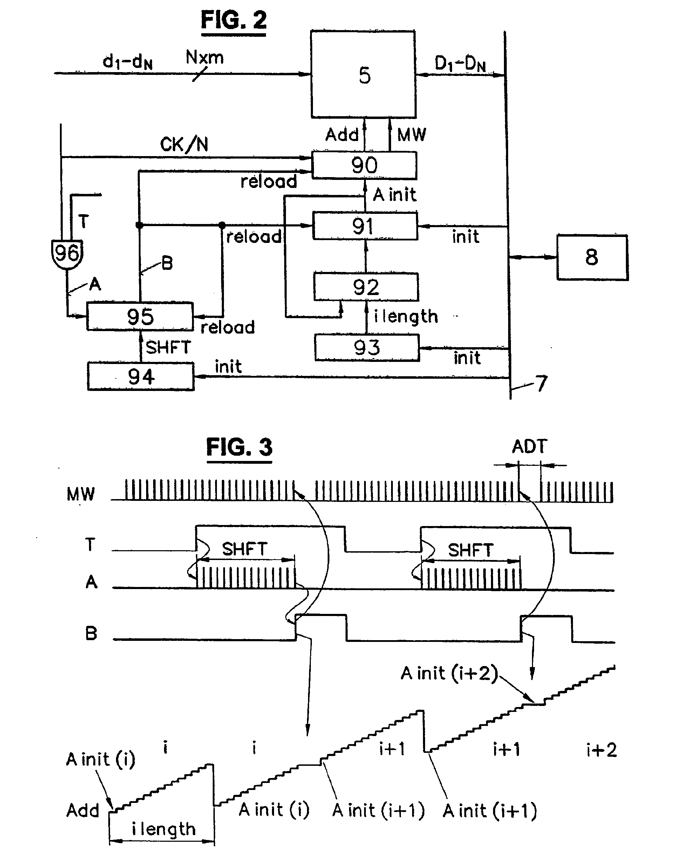

La figure 2 illustre de manière plus détaillée le contrôleur d'adresse 9 selon un mode de réalisation préférentiel de l'invention, tandis que la figure 3 illustre à titre d'exemple plusieurs signaux dans ce contrôleur 9. Les éléments correspondants sur les différentes figures sont désignés par les mêmes numéros de références; les composants du contrôleur d'adresse 9 sur la figure 1 étant indiqués par un numéro commençant par 9 sur la figure 2.

Le contrôleur d'adresse 9 comporte principalement un compteur d'adresse 90 incrémenté par un signal dont la fréquence correspond de préférence à la fréquence d'échantillonnage CK/N des signaux à la sortie du démultiplexeur 2. Le compteur d'adresse 90 fournit en sortie un signal MW (Memory Write) dont la fréquence correspond à celle du signal CK/N ainsi qu'une adresse Add dont la valeur est incrémentée d'une position d'adressage à chaque impulsion du signal MW. Les données numériques d₁-d_{N} fournies par le démultiplexeur 2 sont stockées à chaque impulsion de MW dans la mémoire 5 dans la nouvelle adresse indiquées par le signal Add.

Le compteur d'adresse 90 est cyclique; après avoir compté un nombre d'impulsions prédéterminé, indiqué dans un registre de profondeur de segment 93, l'adresse Add à la sortie du compteur 90 retourne à la valeur initiale de comptage indiquée dans un registre d'adresse initiale 91. Le flux de données numérisées est donc mémorisé dans un segment i de la mémoire 5 dont la longueur i_{LENGTH} est déterminée par le registre 93 et la position initiale A_{INIT}(i) par le registre 91; lorsque le segment est plein, en l'absence d'événement détecté par le circuit 6, les nouvelles données écrasent celles écrites précédemment dans le même segment i. Les registres 90 et 93 sont accessibles depuis le bus 7 et peuvent ainsi être modifiés par les moyens de traitement 8 programmés de manière adéquate.

Le signal d'horloge CK/N est également fourni à l'entrée d'une porte logique de type ET 96 recevant sur son autre entrée un signal de déclenchement T provenant du circuit d'analyse 6 de la figure 1. Le signal A à la sortie de la porte logique 96 est utilisé pour incrémenter un compteur de décalage après déclenchement (post-trigger counter) 95, permettant d'indiquer un décalage temporel de la fenêtre d'analyse. Le compteur 95 est ainsi incrémenté à chaque impulsion du signal d'horloge CK/N dès que le signal T prend la valeur 1, c'est-à-dire dès que le circuit d'analyse 6 a détecté une condition particulière sur le signal numérique analysé.

Après avoir compté un nombre SHFT d'impulsions prédéterminé, indiqué par un registre de décalage 94 accessible par le bus 7 et par les moyens de traitement 8, la sortie B du compteur change d'état, comme indiqué sur la quatrième ligne de la figure 3. La position A_{INIT} du segment d'écriture dans la mémoire 5 est alors décalée d'un segment, au moyen d'un additionneur 92 fournissant à l'entrée de réinitialisation du registre 91 une valeur obtenue en additionnant la valeur précédente A_{INIT}(i) du registre 91 avec la valeur i_{LENGTH} indiquée par le registre de profondeur de segment 93. Le compteur d'adresse 90 est ensuite réinitialisé avec la nouvelle valeur de position initiale de segment indiquée par le registre 91. Le signal MW d'écriture dans la mémoire 5 est de préférence interrompu par le compteur 90 pendant l'intervalle ADT (Acquisition Dead Time) durant lequel les registres et compteurs sont réinitialisés. Le compteur 95 est lui-même réinitialisé à zéro au cours de l'intervalle ADT.

Comme on le voit plus particulièrement sur la dernière ligne de la figure 3 indiquant la valeur Add à la sortie du compteur d'adresse 90, les données numériques d₁-d_{N} sont stockées de manière cyclique dans le même segment dont l'adresse initiale est indiquée par le registre 91 jusqu'à l'occurrence d'un événement détecté par le circuit 6 et indiqué par le signal de déclenchement T. Lorsqu'un événement a été détecté, les données numériques continuent d'être écrites dans ce segment pour un temps prédéterminé. Quand ce délai est écoulé, l'adresse d'écriture est modifiée de sorte que les données suivantes sont écrites dans un autre segment de la mémoire 5, typiquement dans un segment voisin, dont l'adresse initiale est indiquée par le registre 95. Le circuit de traitement 8 pourra ainsi récupérer dans différents segments de la mémoire 5 différentes portions du signal numérique b, correspondant à différentes fenêtres d'observations liées à différentes occurrences de l'événement observé.

L'homme du métier comprendra que d'autres organisations de mémoire et d'autres manières de modifier l'adressage de la mémoire suite à l'occurrence d'un événement dans le flux de donnée peuvent être imaginées. En particulier, si différents événements sont détectés par le circuit d'analyse 6, il est possible de mémoriser dans différents segments de mémoire i des portions du signal liées à chaque type d'événement. Il est également possible par exemple de prévoir des longueurs de segment i_{LENGTH} de taille différente selon le type d'événement observé.

Le circuit numérique d'analyse 6 pourra être réalisé de n'importe quelle manière adaptée selon le type d'événements à observer. A titre d'exemple, dans un mode de réalisation flexible, mais onéreux, chacun des N mots de m bits délivrés par le démultiplexeur 2 peut être traité par un système d'analyse autonome, par exemple par un ou plusieurs processeurs de signaux numériques (DSP), par un processeur polyvalent, par un composant numérique quelconque ou par un circuit intégré spécifique (ASIC). Chaque système d'analyse autonome traite un mot sans tenir compte des analyses effectuées par les autres systèmes. Selon l'application, il est aussi possible de relier les différents systèmes de traitement en réseau. Un signal de déclenchement T peut être selon l'application soit provoqué par n'importe quel système d'analyse, soit lorsque les signaux à la sortie de l'ensemble des systèmes remplissent une condition définie.

Les systèmes d'analyse exécutent de préférence un programme stocké dans une mémoire vive ou morte dont le contenu peut être modifié par le système de traitement numérique 8, par l'intermédiaire du bus 7. De cette manière, le programme exécuté par le système de traitement numérique 8 peut modifier l'analyse effectuée par les systèmes d'analyse et donc adapter les conditions de déclenchement du signal T selon les besoins de l'application.

Dans une autre variante préférentielle, le circuit d'analyse 6 fait appel à un réseau de portes, structure généralement désignée par l'appellation anglo-saxonne de gate array. De préférence, le circuit 6 est constitué par une structure de réseaux de porte programmable par l'utilisateur, connue sous le nom de FPGA (field programmable gate array). De nombreux exemples de circuit comportant une telle structure sont par exemple décrits dans des documents de brevets classés notamment dans le groupe H03K-19/177 de la classification internationale des brevets ; nous ne décrirons donc pas plus en détail ces circuits.

De préférence, le circuit d'analyse 6 est de type SRAM-FPGA. Ce composant exécute alors une opération de traitement déterminée par un algorithme mémorisé dans une mémoire vive de type SRAM (static RAM) (non représentée), dont le contenu permet de reprogrammer le circuit 6. Dans une variante préférentielle de l'invention, le système de traitement numérique 8 peut accéder en écriture au travers du bus 7 au contenu de ladite SRAM, de manière à modifier l'analyse effectuée par le circuit 6 selon les besoins de l'application.

L'homme du métier comprendra que d'autres réalisations du circuit 6 peuvent être imaginées dans le cadre de cette invention.

Dans une variante préférentielle de l'invention, décrite plus particulièrement dans la demande de brevet PCT/CH98/00377 au nom de la demanderesse, le circuit numérique d'analyse 6 fournit également un résultat numérique R traité au système de traitement numérique 8. Le résultat numérique R peut selon l'application et le traitement effectué inclure par exemple un seul bit, par exemple un bit de détection d'erreur ou de détection de situation particulière dans les données numériques, par exemple un bit de détection de zéro ou de maximum. Ce bit peut par exemple être fourni sur une ligne de données du bus 7, ou dans une variante être directement relié à une ligne d'interruption matérielle du processeur numérique 8 ou d'un autre composant du système numérique. Dans une variante, le circuit d'analyse 6 peut également fournir un résultat R sur plus d'un bit, par exemple sur un ou plusieurs octets, accessible à une adresse prédéterminée sur le bus 7. Le résultat R peut par exemple inclure des données de type semi-statique, et indiquer par exemple un état semi-permanent des données numériques.

Il est également possible dans le cadre de cette invention de prévoir plusieurs circuits d'analyse 6 branchés en parallèle effectuant différents traitements sur les données démultiplexées, et fournissant différents résultats R1, R2, etc.. à différentes adresses sur le bus 7. Par exemple, il est possible de prévoir un circuit effectuant une détection d'extrémas, un second circuit effectuant une détection de passage par zéro, un troisième circuit effectuant une détection d'erreurs, etc..

Le circuit numérique d'analyse 6 comprend de préférence une zone de mémoire ou de registre, non représentée, dans laquelle le résultat du traitement est mémorisé. Cette zone de mémoire peut être accédée par le système de traitement numérique 8 à une adresse prédéterminée.

Le système de traitement numérique 8 peut accéder selon le programme exécuté soit aux données D₁-D_{N} mémorisées dans la mémoire 5, soit aux résultats R délivrés par le circuit 6, soit aux deux à la fois. Il accède aux résultats R du circuit numérique d'analyse 6 de préférence par l'intermédiaire des lignes de données du bus 7 ou, comme évoqué, de lignes d'interruption. Par exemple, dans le cas où le circuit 6 effectue une détection d'erreur ou d'événement particulier sur le signal d'entrée, il est possible de modifier au moyen d'un signal d'interruption le déroulement du programme exécuté par le processeur numérique 8 lorsqu'une erreur ou une configuration particulière est effectivement détectée. Le signal d'interruption R pouvant éventuellement être généré avant même que le système numérique n'accède aux données correspondantes dans la mémoire 5, il est donc possible de modifier le traitement ou l'affichage de ces données lorsqu'un tel événement est détecté.

## Revendications

1. Circuit de conversion d'un signal d'entrée analogique (a) haute fréquence en une pluralité de signaux numériques (D₁-D_{N}) aptes à être traités par un processeur numérique (8) dans un système d'acquisition de données, comprenant :
un convertisseur analogique-numérique (1) à m bits,
une mémoire (5) de stockage des données numériques (d₁-d_{N}) converties par ledit convertisseur, ladite mémoire étant accessible par ledit processeur numérique (8),
un compteur d'adresse (90) définissant l'adresse à laquelle doivent être mémorisées les dites données numériques (d₁,d_{N}) dans la dite mémoire.
un circuit d'analyse (6) en temps réel desdites données numériques (d₁-d_{N}), arrangé pour générer un signal de déclenchement (T) suite à la détection d'un événement prédéfini dans lesdites données numériques (d₁-d_{N}),
**caractérisé en ce que** ledit compteur d'adresse est contrôlé de manière à provoquer l'écriture cyclique de segments successifs de données dans un segment de ladite mémoire (5), puis dans un autre segment suite à l'occurrence dudit signal de déclenchement (T).

2. Circuit selon la revendication précédente, **caractérisé par** un démultiplexeur (2) pour démultiplexer les données numériques (d₁-d_{N}) fournies par ledit convertisseur analogique-numérique (1) et fournir en parallèle à ladite mémoire (5) et audit circuit d'analyse (6) N mots de m bits à partir de N mots de m bits fournis successivement par ledit convertisseur analogique-numérique (1).

3. Circuit selon la revendication précédente, **caractérisé en ce que** le fonctionnement dudit compteur d'adresse (90) est contrôlé par ledit processeur numérique (8).

4. Circuit selon la revendication précédente, **caractérisé en ce** le fonctionnement dudit compteur d'adresse (90) est contrôlé par une pluralité de registres (91, 93, 94) dont au moins certains sont accessibles en écriture par ledit processeur numérique (8) et/ou par ledit circuit d'analyse (6).

5. Circuit selon la revendication 1, **caractérisé en ce que** la longueur desdits segments est contrôlée par ledit processeur numérique (8) et/ou par ledit circuit d'analyse (6).

6. Circuit selon la revendication précédente, **caractérisé en ce que**, suite à l'occurrence d'un dit événement prédéfini, la valeur dudit compteur (90) est incrémentée d'une valeur mémorisée dans un registre (93) accessible en écriture par ledit processeur numérique (8) et/ou par ledit circuit d'analyse (6).

7. Circuit selon l'une des revendications précédentes, **caractérisé en ce que** la position initiale desdits segments est indiquée dans un registre (91) accessible par ledit processeur numérique (8) et/ou par ledit circuit d'analyse (6).

8. Circuit selon l'une des revendications précédentes, **caractérisé par** un registre (94) accessible par ledit processeur numérique (8) et/ou par ledit circuit d'analyse (6) indiquant à partir de quel instant ladite adresse de stockage doit être modifiée par ledit circuit d'analyse (6) suite à l'occurrence dudit signal de déclenchement (T).

9. Circuit selon la revendication précédente, **caractérisé en ce que** ledit circuit d'analyse (6) fournit en outre des résultats traités audit processeur numérique (8).

10. Circuit selon l'une des revendications précédentes, **caractérisé en ce que** la fréquence d'échantillonnage du convertisseur analogique-numérique (1) est supérieure à la fréquence de travail du processeur numérique (8).

11. Circuit selon l'une des revendications précédentes, **caractérisé en ce que** ledit circuit d'analyse (6) en temps réel comprend N systèmes d'analyse en parallèles.

12. Circuit selon la revendication précédente, **caractérisé en ce que** chaque système d'analyse comporte un processeur de signal.

13. Circuit selon l'une des revendications précédentes, **caractérisé en ce que** ledit circuit d'analyse (6) en temps réel comprend un ou plusieurs gate arrays.

14. Circuit selon la revendication précédente, **caractérisé en ce que** ledit circuit d'analyse (6) en temps réel comprend un ou plusieurs field programmable gate arrays.

15. Circuit selon la revendication précédente, **caractérisé en ce que** ledit circuit d'analyse (6) en temps réel comprend un ou plusieurs field programmable gate arrays dont l'algorithme est contenu dans une mémoire vive.

16. Circuit selon la revendication précédente, **caractérisé en ce que** ladite mémoire vive est accessible en lecture et/ou en écriture par ledit processeur numérique (8).

17. Circuit selon l'une des revendications précédentes, **caractérisé en ce que** ladite mémoire (5) comprend une mémoire à double accès accessible simultanément par ledit processeur numérique (8) et par ledit démultiplexeur (2) ou par ledit convertisseur (1).

18. Oscilloscope comprenant un circuit selon l'une des revendications précédentes.

## Claims

1. Circuit for converting a high-frequency analog input signal (a) into a plurality of digital signals (D1-DN) capable of being processed by a digital processor (8) in a data acquisition system, comprising:
an analog-to-digital m-bits converter (1),
a memory (5) for storing the digital data (d1-dN) converted by said converter, said memory being accessible by said digital processor (8),
an address counter (90) defining an address at which said digital data (d1-dN) are to be stored in said memory,
a circuit (6) for analyzing in real time said digital data (d1-dN), arranged for generating a trigger signal (T) following the detection of a predefined event in said digital data (d1-dN),
**characterized in that** said address counter is controlled so as to cause the cyclical writing of successive segments of data in one segment of said memory (5) and then in another segment following the occurrence of said trigger signal (T).

2. Circuit according to the preceding claim, **characterized by** a demultiplexer (2) for demultiplexing the digital data (d1-dN) supplied by said analog-to-digital converter (1) and for supplying in parallel to said memory (5) and to said analysis circuit (6) N words of m bits from N words of m bits supplied in series by said analog-to-digital converter (1).

3. Circuit according to the preceding claim, **characterized in that** the functioning of said address counter (90) is controlled by said digital processor (8).

4. Circuit according to the preceding claim, **characterized in that** the functioning of said address counter (90) is controlled by a plurality of registers (91, 93, 94) of which at least several are accessible in writing by said digital processor (8) and/or by said analysis circuit (6).

5. Circuit according to claim 1, **characterized in that** the length of said segments is controlled by said digital processor (8) and/or by said analysis circuit (6).

6. Circuit according to the preceding claim, **characterized in that**, following the occurrence of a said predefined event, the value of said counter (90) is incremented by a value stored in a register (93) accessible in writing by said digital processor (8) and/or by said analysis circuit (6).

7. Circuit according to one of the preceding claims, **characterized in that** the initial position of said segments is indicated in a register (91) accessible by said digital processor (8) and/or by said analysis circuit (6).

8. Circuit according to one of the preceding claims, **characterized by** a register (94) accessible by said digital processor (8) and/or by said analysis circuit (6) indicating from which instant onwards said storage address must be modified by said analysis circuit (6) following the occurrence of a said trigger signal (T).

9. Circuit according to the preceding claim, **characterized in that** said analysis circuit (6) further supplies processed results to said digital processor (8).

10. Circuit according to one of the preceding claims, **characterized in that** the sampling frequency of the analog-to-digital converter (1) is greater than the processing rate of the digital processor (8).

11. Circuit according to one of the preceding claims, **characterized in that** said real-time analysis circuit (6) comprises N analysis systems in parallel.

12. Circuit according to the preceding claim, **characterized in that** each analysis system comprises a signal processor.

13. 15. Circuit according to one of the preceding claims, **characterized in that** said real-time analysis circuit (6) comprises one or several gate arrays.

14. Circuit according to the preceding claim, **characterized in that** said real-time analysis circuit (6) comprises one or several field programmable gate arrays.

15. Circuit according to the preceding claim, **characterized in that** said real-time analysis circuit (6) comprises one or several field programmable gate arrays whose algorithm is contained in a RAM.

16. Circuit according to the preceding claim, **characterized in that** said RAM is accessible in reading and/or writing by said digital processor (8).

17. Circuit according to one of the preceding claims, **characterized in that** said memory (5) comprises a double access memory accessible simultaneously by said digital processor (8) and by said demultiplexer (2) or by said converter (1).

18. Oscilloscope comprising a circuit according to one of the preceding claims.

## Patentansprüche

1. Schaltung für die Umwandlung eines Hochfrequenz analogen Eingangssignals (a) in eine Mehrzahl von digitalen Signalen (D₁-D_{N}), welche durch einen Digitalprozessor (8) in einem Datenerfassungssystem bearbeitet werden können, mit:
einem Analog-Digital-Umwandler (1) mit m Bits,
einem Speicher (5) für das Abspeichern von vom benannten Umwandler umgewandelten Digitaldaten (d₁-d_{N}), wobei auf benannten Speicher vom benannten Digitalprozessor (8) zugegriffen werden kann,
einem Adressenzähler (90), welcher die Adresse definiert, an welche die benannten Digitaldaten (d₁-d_{N}) in benanntem Speicher zu speichern sind,
einer Schaltung (6) zur Analyse in Echtzeit der benannten Digitaldaten (d₁-d_{N}), angeordnet um ein Auslösesignal (T) nach Erkennung eines vorbestimmten Ereignisses in den benannten Digitaldaten (d₁-d_{N}) zu erzeugen,
**dadurch gekennzeichnet, dass** der benannte Adressenzähler so kontrolliert wird, dass das zyklische Schreiben von sukzessiven Daten in einem Segment des benannten Speichers (5) und dann in einem anderen Segment nach Ereignis benannten Auslösesignals (T) verursacht wird.

2. Schaltung gemäss dem vorhergehenden Anspruch, **gekennzeichnet durch** einen Entmultiplexer (2), um die vom Analog-Digital-Umwandler (1) gelieferten Digitaldaten (d₁-d_{N}) zu entmultiplexieren, und um dem benannten Speicher (5) und der benannten Analyseschaltung (6) N Worte von m bits aus N Worten von m bits, die sukzessiv von dem benannten Analog-Digital-Umwandler (1) geliefert werden, parallel zu liefern.

3. Schaltung gemäss dem vorhergehenden Anspruch, **dadurch gekennzeichnet, dass** der Betrieb des benannten Adressenzählers (90) vom benannten Digitalprozessor (8) kontrolliert wird.

4. Schaltung gemäss dem vorhergehenden Anspruch, **dadurch gekennzeichnet, dass** der Betrieb des benannten Adressenzählers (90) von einer Vielzahl von Registern (91, 93, 94) kontrolliert wird, von denen mindestens einige vom benannten Digitalprozessor (8) und/oder von der benannten Analyseschaltung (6) schreibzugänglich sind.

5. Schaltung gemäss Anspruch 1, **dadurch gekennzeichnet, dass** die Länge der benannten Segmenten vom benannten Digitalprozessor (8) und/oder von der benannten Analyseschaltung (6) kontrolliert wird.

6. Schaltung gemäss dem vorhergehenden Anspruch, **dadurch gekennzeichnet, dass** nach Eintreten eines benannten vorbestimmten Ereignisses, der Wert des benannten Zählers (90) um einen Wert inkrementiert wird, der in einem vom benannten Digitalprozessor (8) und/oder von der benannten Analyseschaltung (6) schreibzugänglichen Register (93) gespeichert ist.

7. Schaltung gemäss einem der vorhergehenden Ansprüche, **dadurch gekennzeichnet, dass** die Anfangsposition der benannten Segmente in einem vom benannten Digitalprozessor (8) und/oder von der benannten Analyseschaltung (6) zugänglichen Register (91) angegeben ist.

8. Schaltung gemäss einem der vorhergehenden Ansprüche, von einem Register (94) **gekennzeichnet**, der vom benannten Digitalprozessor (8) und/oder von der benannten Analyseschaltung (6) zugänglich ist und der angibt, ab welchem Moment die benannte Speicheradresse von der benannten Analyseschaltung (6) nach Eintreten des benannten Auslösesignals (T) zu ändern ist.

9. Schaltung gemäss dem vorhergehenden Anspruch, **dadurch gekennzeichnet, dass** die benannte Analyseschaltung (6) zudem dem benannten Digitalprozessor (8) verarbeitete Resultate liefert.

10. Schaltung gemäss einem der vorhergehenden Ansprüche, **dadurch gekennzeichnet, dass** die Abtastfrequenz des Analog-Digital-Umwandlers (1) grösser als die Arbeitsfrequenz des Digitalprozessors (8) ist.

11. Schaltung gemäss einem der vorhergehenden Ansprüche, **dadurch gekennzeichnet, dass** die benannte Analyseschaltung (6) in Echtzeit N parallele Analysesysteme umfasst.

12. Schaltung gemäss dem vorhergehenden Anspruch, **dadurch gekennzeichnet, dass** jedes Analysesystem einen Signalprozessor umfasst.

13. Schaltung gemäss einem der vorhergehenden Ansprüche, **dadurch gekennzeichnet, dass** die benannte Analyseschaltung (6) in Echtzeit ein oder mehrere Gate Arrays umfasst.

14. Schaltung gemäss dem vorhergehenden Anspruch, **dadurch gekennzeichnet, dass** die benannte Analyseschaltung (6) in Echtzeit ein oder mehrere programmierbare Gate Arrays umfasst.

15. Schaltung gemäss dem vorhergehenden Anspruch, **dadurch gekennzeichnet, dass** die benannte Analyseschaltung (6) in Echtzeit ein oder mehrere feldprogrammierbare Gate Arrays umfasst, dessen Algorithmus in einem Schreib-Lesespeicher (RAM) enthalten ist.

16. Schaltung gemäss dem vorhergehenden Anspruch, **dadurch gekennzeichnet, dass** der benannte Schreib-Lesespeicher (RAM) vom benannten Digitalprozessor (8) lese- und/oder schreibzugänglich ist.

17. Schaltung gemäss einem der vorhergehenden Ansprüche, **dadurch gekennzeichnet, dass** der benannte Speicher (5) einen zweifachzugänglichen Speicher umfasst, der gleichzeitig vom benannten Digitalprozessor (8) und vom benannten Entmultiplexer (2) oder dem benannten Umwandler (1) zugänglich ist.

18. Oszilloskop mit einer Schaltung gemäss einem der vorhergehenden Ansprüche.
